# EUROPÄISCHE PATENTANMELDUNG

(11) **EP 1 050 447 A2**
(43) Veröffentlichungstag der Anmeldung: **08.11.2000**
(21) Anmeldenummer: 00106203.3
(22) Anmeldetag: 22.03.2000
(51) Int. Cl.: B62D 25/08

(54) **Kraftfahrzeug mit einem Montagekasten an einer Stirnwand zwischen Motorraum und Fahrgastzelle**

(30) Priorität: 03.05.1999 DE 19920235
(71) Anmelder: Volkswagen Aktiengesellschaft, 38436 Wolfsburg (DE)
(72) Erfinder: Hoffmann, Bernd, 38106 Braunschweig (DE)
(74) Vertreter: Cohausz & Florack

(57) **Zusammenfassung**

Die Erfindung betrifft ein Kraftfahrzeug mit einem Montagekasten (1) an einer Stirnwand (2) zwischen einem Motorraum (3) und einer Fahrgastzelle (4). Erfindungsgemäß ist die Stirnwand (2) ein Stirnwandverbund aus wenigstens zwei Stirnwandteilen (7, 8), der zumindest in einem Teilbereich eine Aussparung (9) aufweist. Die Aussparung (9) ist zumindest mit einem Teilbereich einer Montagekastenwand (12) verschlossen. Mit dem erfindungsgemäßen Aufbau übernimmt der Montagekasten (1) durch die in die Aussparung (9) eingesetzte Montagekastenwand (12) eine Doppelfunktion als Stirnwandelement und als Montagekastenelement, so daß damit der Materialaufwand, das Fahrzeuggewicht und der Montageaufwand reduziert wird.

## Beschreibung

Die Erfindung betrifft ein Kraftfahrzeug mit einem Montagekasten an einer Stirnwand zwischen Motorraum und Fahrgastzelle nach dem Oberbegriff des Anspruchs 1.

Bei allgemein bekannten Kraftfahrzeugen ist im Wasserkastenbereich einer Stirnwand zwischen Motorraum und Fahrgastzelle ein Montagekasten zur Aufnahme von Einbauteilen angebracht. Dabei wird üblicherweise die Stirnwand aus einem einzigen Blechteil tiefgezogen und motorseitig ein Montagekasten angebaut und beispielsweise mittels Schweißen verbunden. Bei manchen Bauraumverhältnissen ist es aufgrund von blechziehtechnischen Gründen, insbesondere bei großen Ziehtiefen und Ziehwinkeln sowie Hinterschneidungen, nicht möglich, eine Stirnwand aus Stahlblech aus einem einzigen Blechteil zu ziehen. Auch bei solchen bekannten Anordnungen werden die Stirnwandteile zuerst zu einer durchgehenden Stirnwand verbunden und anschließend ein Montagekasten aufgesetzt und angebaut. Dadurch entstehen Materialdopplungen im Bereich der Stirnwand und einer angrenzenden Montagekastenwand, die zu einem ungünstig hohen Materialverbrauch führen und das Fahrzeuggewicht und den Montageaufwand erhöhen.

Aufgabe der Erfindung ist es, eine gattungsgemäße Anordnung eines Montagekastens an einer Stirnwand zwischen Motorraum und Fahrgastzelle so weiterzubilden, daß der Materialaufwand, das Fahrzeuggewicht und der Montageaufwand reduziert werden können.

Diese Aufgabe wird mit den Merkmalen des Anspruchs 1 gelöst.

Gemäß Anspruch 1 ist die Stirnwand ein Stirnwandverbund aus wenigstens zwei Stirnwandteilen, der zumindest in einem Teilbereich eine Aussparung aufweist, die mit einem Teilbereich einer Montagekastenwand verschlossen ist.

Damit übernimmt der Montagekasten durch die in die Aussparung eingesetzte Montagekastenwand eine Doppelfunktion: Einerseits ist diese Montagekastenwand ein Verbindungsbauteil und ein Stirnwandelement, so daß in diesem Bereich Materialdopplungen entfallen und ggf. Verbindungen, insbesondere Schweißverbindungen reduzierbar sind. Andererseits ist die in die Aussparung eingesetzte Montagekastenwand in einer weiteren Funktion ein Wandteil des Montagekastens. Insgesamt sind damit der Materialaufwand, das Fahrzeuggewicht und der Montageaufwand gegenüber herkömmlichen Montagekastenanordnungen reduzierbar.

Für eine stabile Verbindung der wenigstens zwei Stirnwandteile ist die Aussparung mit gegenüberliegenden, beabstandeten Stirnwandteilrändern ausgebildet, so daß die wenigstens zwei Stirnwandteile an den gegenüberliegenden Stirnwandteilrändern über die Montagekastenwand fest miteinander verbunden sind. Dabei kann die Montagekastenwand auch integraler Bestandteil eines Stirnwandteils des Stirnwandverbundes sein.

Grundsätzlich kann ein solcher Montagekasten, der Aussparungen zwischen wenigstens zwei Stirnwandteilen ausfüllt und diese verbindet, auch von der Motorraumseite her montiert werden. Vorzugsweise ist jedoch eine Montage von innen, d. h. von der Fahrgastzelle her durchführbar. Die in den Montagekasten einzubauenden Einbauteile werden zweckmäßig von der Motorraumseite her montiert. Der Montagekasten wird dabei vorzugsweise im Wasserkastenbereich angeordnet.

Für den Fall, daß die Stirnwandteile und die in der Aussparung eingesetzte Montagekastenwand aus Stahlblech hergestellt sind, können diese Teile vorteilhaft miteinander durch Schweißen und/oder Nieten und/oder Clinchen und/oder Schrauben und/oder Kleben verbunden sein.

Die Stirnwandteile und/oder die in die Aussparung eingesetzte Montagekastenwand können ggf. auch aus anderen Werkstoffen, wie Leichtmetall und/oder Sandwichmaterialien und/oder Kunststoffmaterialien und/oder aus Laminaten, insbesondere CFK oder GFK hergestellt sein. Für diesen Fall ergeben sich geeignete Verbindungen durch Nieten und/oder Clinchen und/oder Schrauben und/oder Kleben.

Da in der Regel eine durchgehend dichte Stirnwand erreicht werden soll, wird für die Verbindung der Stirnwandteile und der Montagekastenwand eine dichte Klebung oder bei anderen Verbindungstechniken die Verwendung einer Dichtung, vorzugsweise eines eingelegten Dichtungsbandes vorgeschlagen.

Die Größe eines Montagekastens kann je nach der Bauraumanforderung und dem Aufrüstungsgrad eines Fahrzeugs mit Einbauteilen variiert werden, ohne daß Adaptionsprobleme vorliegen, wobei nur die jeweils in die gleiche Aussparung eingesetzte Montagekastenwand gleich ausgeführt werden muß.

Grundsätzlich können auch mehrere Montagekästen an verschiedenen Stellen der Stirnwand bzw. an Stirnwandaussparungen eingesetzt und befestigt werden, um eine optimale Bauraumausnutzung unter Berücksichtigung produktionstechnischer Anforderungen an die verwendeten Bauteile zu erreichen.

Anhand einer Zeichnung wird die Erfindung näher erläutert.

Es zeigen:
- Fig. 1: einen schematischen Längsschnitt durch einen an einem Stirnwandverbund zwischen Motorraum und Fahrgastzelle angeordneten Montagekasten,
- Fig. 2: eine schematische Darstellung eines Stirnwandverbundes mit einer Montagekastenwand, die integraler Bestandteil eines Stirnwandteils ist, und
- Fig. 3: einen schematischen Querschnitt durch einen an einer Stirnwand zwischen Motorraum und Fahrgastzelle angeordneten Montagekasten.

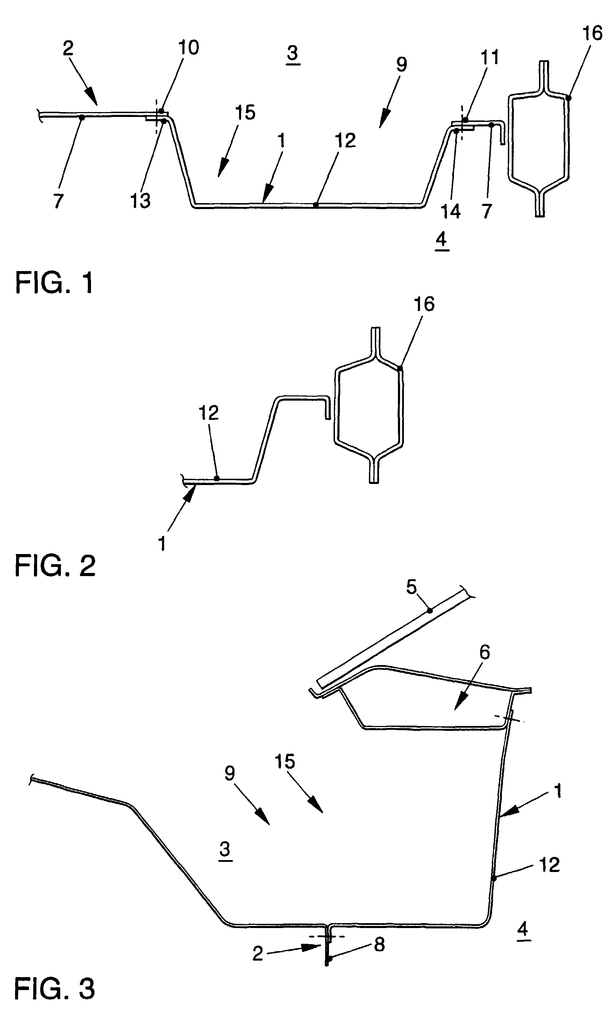

In der Fig. 1 ist schematisch ein Schnitt durch einen Montagekasten 1 eines Kraftfahrzeugs an einer Stirnwand 2 dargestellt. Diese Stirnwand 2 ist zwischen einem Motorraum 3 und einer Fahrgastzelle 4 des Kraftfahrzeugs angeordnet.

Wie dies aus Fig. 3 ersichtlich ist, ist der Montagekasten 1 im Bereich unterhalb einer Windschutzscheibe 5 in einem Wasserkastenbereich 6 angeordnet.

Die Stirnwand 2 ist aus einem ersten, oberen Stirnwandteil 7 und einem zweiten, unteren Stirnwandteil 8 hergestellt. Diese beiden Stirnwandteile 7, 8 weisen zumindest in einem Teilbereich eine Aussparung 9 mit gegenüberliegenden, beabstandeten Stirnwandteilrändern 10,11 auf. Bezugszeichen 16 kennzeichnet eine A-Säule.

Die Aussparung 9 zwischen den Stirnwandteilen 7, 8 ist in einer Einbauposition 15 des Montagekastens 1 von einer Montagekastenwand 12 des Montagekastens 1 verschlossen. Die Montagekastenwand 12 des Montagekastens 1 ist dabei so dimensioniert, daß die Montagekastenwand 12 in einem Randbereich 13, 14 auf den Stirnwandteilrändern 10, 11 der beiden Stirnwandteile 7, 8 anliegt. Dadurch werden die beiden Stirnwandteile 7, 8 an den gegenüberliegenden Stirnwandteilrändern 10, 11 über die Montagekastenwand 12 fest miteinander verbunden.

Die Stirnwandteile 7, 8 sowie die in die Aussparung 9 eingesetzte Montagekastenwand 12 des Montagekastens 1 sind aus Stahlblech hergestellt und können deshalb in deren Auflagebereich miteinander durch Schweißen und/oder Nieten und/oder Clinchen und/oder Schrauben und/oder Kleben verbunden werden. Um eine dichte Verbindung zwischen den Stirnwandteilen 7, 8 und der Montagekastenwand 12 herzustellen, wird vorzugsweise eine Klebung als Verbindungsmittel vorgeschlagen. Alternativ kann jedoch die Verbindung auch mit einem zusätzlichen eingelegten Dichtungsband, was hier allerdings nicht dargestellt ist, z. B. in Verbindung mit einer Verschraubung der Bauteile erfolgen.

Die Montage des Montagekastens 1 erfolgt vorzugsweise von der Innenraumseite her, wobei die in den Montagekasten 1 einzubauenden Einbauteile zweckmäßig von der Motorraumseite her montiert werden können.

In der Fig. 2 ist eine Ausführungsform dargestellt, bei der die Montagekastenwand 12 integraler Bestandteil des Stirnwandteils 7 ist.

### BEZUGSZEICHENLISTE

- 1: Montagekasten
- 2: Stirnwand
- 3: Motorraum
- 4: Fahrgastzelle
- 5: Windschutzscheibe
- 6: Wasserkastenbereich
- 7: oberes Stirnwandteil
- 8: unteres Stirnwandteil
- 9: Aussparung
- 10: Stirnwandteilrand
- 11: Stirnwandteilrand
- 12: Montagekastenwand
- 13: Rand
- 14: Rand
- 15: Einbauposition
- 16: A-Säule

## Patentansprüche

1. Kraftfahrzeug mit einem Montagekasten an einer Stirnwand zwischen Motorraum und Fahrgastzelle,
dadurch gekennzeichnet daß
die Stirnwand (2) ein Stirnwandverbund aus wenigstens zwei Stirnwandteilen (7, 8) ist, der zumindest in einem Teilbereich eine Aussparung (9) aufweist, und
die Aussparung (9) zumindest mit einem Teilbereich einer Montagekastenwand (12) verschlossen ist.

2. Kraftfahrzeug mit einem Montagekasten nach Anspruch 1,
dadurch gekennzeichnet, daß
die Aussparung (9) mit gegenüberliegenden, beabstandeten Stirnwandteilrändern (10, 11) ausgebildet ist, und
die wenigstens zwei Stirnwandteile (7, 8) an den gegenüberliegenden Stirnwandteilrändern (10, 11) über die Montagekastenwand (12) fest miteinander verbunden sind.

3. Kraftfahrzeug mit einem Montagekasten nach Anspruch 1 oder Anspruch 2,
dadurch gekennzeichnet, daß
die Montagekastenwand (12; 17) integraler Bestandteil eines Stirnwandteils des Stirnwandverbundes ist.

4. Kraftfahrzeug mit einem Montagekasten nach einem der Ansprüche 1 bis 3,
dadurch gekennzeichnet, daß
der in einem Wasserkastenbereich (6) montierbare Montagekasten (1) für eine herkömmliche Montage vom Innenraum (4) her hergerichtet ist und Einbauteile gegebenenfalls vom Motorraum (3) her montierbar sind.

5. Kraftfahrzeug mit einem Montagekasten nach einem der Ansprüche 1 bis 4,
dadurch gekennzeichnet, daß
die Stirnwandteile (7, 8) und die in die Aussparung (9) eingesetzte Montagekastenwand (12) aus Stahlblech hergestellt sind und miteinander durch Schweißen und/oder Nieten und/oder Clinchen und/oder Schrauben und/oder Kleben verbunden sind.

6. Kraftfahrzeug mit einem Montagekasten nach einem der Ansprüche 1 bis 4,
dadurch gekennzeichnet, daß
die Stirnwandteile (7, 8) und/oder die in die Aussparung (9) eingesetzte Montagekastenwand (12) aus Leichtmetall und/oder Sandwichmaterialien und/oder Kunststoffmaterialien und/oder aus Laminaten, insbesondere CFK oder GFK, hergestellt sind und miteinander durch Nieten und/oder Clinchen und/oder Schrauben und/oder Kleben verbunden sind.

7. Kraftfahrzeug mit einem Montagekasten nach einem der Ansprüche 1 bis 6,
dadurch gekennzeichnet, daß
die Verbindung zwischen den Stirnwandteilen (7, 8) und der Montagekastenwand (12) dicht mittels einer Klebung und/oder einer Dichtung, vorzugsweise einem eingelegten Dichtungsband ausgeführt ist.

8. Kraftfahrzeug mit einem Montagekasten nach einem der Ansprüche 1 bis 7,
dadurch gekennzeichnet, daß
unterschiedlich große Montagekästen (1) mit gleicher, jeweils in eine gleiche Aussparung (9) einsetzbarer Montagekastenwand (12) für einen Einbau zur Verfügung stehen.

9. Kraftfahrzeug mit einem Montagekasten nach einem der Ansprüche 1 bis 8,
dadurch gekennzeichnet, daß
die Stirnwand (2) aus mehreren Stirnwandteilen (7, 8) mit jeweils an verschiedenen Stellen dazwischenliegenden Aussparungen (9) besteht und in jede Aussparung (9) ein Montagekasten (1) mit einer zugeordneten Montagekastenwand (12) einsetzbar ist.
